# EUROPEAN PATENT SPECIFICATION

(11) **EP 1 852 727 B1**
(45) Date of publication and mention of the grant of the patent: **05.08.2009**
(21) Application number: 06425297.6
(22) Date of filing: 03.05.2006
(51) Int. Cl.: G02B 23/16

(54) **Equatorial support for a telescope**
Äquatoriale Montierung für ein Teleskop
Support équatorial de télescope

(43) Date of publication of application: 07.11.2007
(73) Proprietor: Lopresti, Claudio, 19123 La Spezia (IT); Bercella, Franco, 43040 Ramiola Di Medesano (Parma) (IT)
(72) Inventor: Lopresti, Claudio, 19123 La Spezia (IT)
(74) Representative: Long, Giorgio

(56) References cited:
- DE-A1- 10 326 412
- US-A- 1 829 614
- US-A- 2 212 346
- US-A- 2 649 791
- US-A- 4 682 091
- US-A- 4 927 252

## Description

The present invention relates to a support for telescopes, particularly of a portable type, for amateur or semi-amateur telescopes, though it can be also applied to fixed telescopes and professional telescopes.

Various types of supports or mounts for telescopes are available. According to a first general classification, mounts can be divided into altazimuth mounts and equatorial mounts.

In altazimuth mounts, the two axes about which the telescope can move are the one orthogonal and the other parallel to the ground, such that the optics can move in all the directions along Cartesian axes. However, this arrangement of the axes of movement does not correspond to the arrangement of the Earth's axis and equatorial plane, which, as is known, at other latitudes than the poles are inclined relative thereto. Consequently, due to the Earth's true motion (spin about the North-South polar axis in the West-East direction), the optics, in order to track a celestial body in apparent motion, requires to be moved instant by instant along both axes in both directions. This movement is very complicated, and together with the rotation of the field of view during the movement, a prerequisite condition is also the constant movement of both motors relative to the two axes of movement (azimuth and altitude) in addition to a sophisticated automation (the so-called field derotator), which is normally inaccessible to beginners and amateur astronomers in general because of the high cost. The advantage of the altazimuth mount, however, is its weight balance, which makes it applicable also to large-sized telescopes.

The second type of mount, i.e. the equatorial mount, is characterized in that one of the two axes (said polar or right ascension axis) is capable of being inclined such as to be arranged parallel to the Earth's axis and thus perpendicular to the equator. Particularly, the right ascension axis (RA axis) is inclined by as many degrees as the ones of the latitude of the observation place and such as to be parallel to the pole (the North Pole for Northern hemisphere, and the South Pole for Southern hemisphere). This configuration allows one to track the apparent motion of a celestial body by moving the telescope about only one axis, i.e. by means of a simple motion that can be easily provided by means of an inexpensive drive. For this reason, the equatorial mount has become the most widely used in amateur telescopes.

Three main categories of equatorial mounts are available.
German mounts
fork mounts
English mounts (also said cradle or frame mounts).

German mounts consist of a cantilever framework supporting an optics that is capable of moving about a declination axis and about the polar axis (RA axis). The loads of the optical components are thus unbalanced to the North relative to the basement supporting the telescope. For this reason, the optical part has to be counter-balanced by suitably sized and spaced counterweights. A particular accessory, called the "equatorial head", is indispensable for the polar axis to be properly oriented to the Celestial Pole.

Fork mounts also consist of a cantilever framework, with loads unbalanced to the North relative to the barycentre of the basement supporting the telescope. The optics is held by a U-shaped fork which rotates about the RA axis, the optics rotating therein about the declination axis. In this case, as no counter-weights are provided, in order to prevent that, due to the optical part unbalancing to the North, the instrument may fall in that direction, the equatorial head is built cantilevered to the South; thereby, the instrument barycentre is still inside the basement, but both the optics and equatorial head are, in this solution, cantilevered. Also in this case, the "equatorial head" is indispensable for the polar axis to be properly oriented to the Celestial Pole. The framework stiffening, to the purpose of restraining the inevitable vibrations of the cantilevered parts (the equatorial head and the fork), is only obtained by making the basement heavier, thus making the assembly more difficult to transport and also more expensive.

English mounts, on the other hand, consist of a frame placed on two piers, which holds the optics. The great advantage of this mount is that all weights are balanced, as their barycentre is at the intersection between the declination and right ascension axes. Due to this characteristic, the English mount is the elective mount for very large and heavy telescopes, particularly for the large telescopes in astronomical observatories, such as the Hale telescope at the Palomar Mountain observatory. English mount, however, has a drawback that makes it inapplicable to amateur telescopes: the two piers holding the frame along which the RA axis passes must be especially manufactured according to the latitude of the observatory location. In other words, the frame is pivotally fastened to the two piers at such points as dictated by the inclination that the RA axis must have, which, in turn, coincides with the latitude of the observation place. Furthermore, since it requires two support piers or frames, this mount is very bulky and heavy.

These characteristics make the English mount non-transportable, even if it were built in a size suitable for an amateur telescope. In fact, as small telescopes generally are not placed in a fixed location, they must be easy to transport in order to allow carrying out observation activities in places with low light and high air transparency, such as in the high mountains. Therefore, while on the one hand, a small size and a light weight are a selection factor for a telescope mount, on the other hand, whenever the latter has to be transported to a different place, the latitude requires to be adjusted, which cannot be done with English mounts.

In view of the above, it is understood that the commercially-available mounts for amateur telescopes are normally German or fork equatorial mounts and only seldom altazimuth ones, never English ones.

A further support for a telescope according to the preamble of claim 1 is known from US 4,927,252.

The problem at the heart of the present invention is thus to provide a support for telescopes which is characterized by being easily transported, free of cantilevered parts (and thus free of the vibrations generating therefrom) and by a perfect weight balance, such that relatively large-sized amateur telescopes are also made transportable.

This problem is solved by means of a telescope support according to claim 1.

Further features and advantages of the present invention will be better understood from the description of some exemplary embodiments, which is given below by way of non-limiting illustration, with reference to the following figures:
Fig. 1 shows a perspective view of a telescope support according to the invention with a reflector telescope being fitted thereto;
Fig. 2 shows a perspective view of a second embodiment of the telescope support according to the invention;
Fig. 3 shows a perspective view of a different embodiment of the telescope mount for the support according to the invention;
Fig. 4, 5 and 6 show a perspective view of different embodiments of the tripod according to the invention;
Fig. 7 shows a perspective view of a different embodiment of the support according to the invention;
Fig. 8 shows a perspective view of a further embodiment of the support according to the invention;
Fig. 9 shows a perspective view of a support being adapted to a fork mount; this embodiment is not within the scope of the claims;
Fig. 10 shows a perspective view of a further this embodiment is not within the scope of the claims;
Fig. 11 shows a perspective view of a further embodiment of the support according to the invention, in which the telescope consists of an open frame structure;
Fig. 12 shows a perspective view of a detail of the inventive support, according to a preferred embodiment;
Fig. 13 shows a perspective view of a different detail of the embodiment from Fig. 12;
Fig. 14 shows a partially sectional perspective view of a sliding element for the circle arc-shaped elements of the inventive support;
Fig. 15 shows a sectional front view of the sliding mechanism of a different embodiment of the inventive sliding elements;
Fig. 16 shows a perspective view of a detail of the motor drive of the support according to the invention;
Fig. 17 shows a partially sectional side schematic view of a detail of the motor drive of the support of the invention;
Fig. 18 shows a side schematic view of a detail of the motor drive of the inventive support, according to a different embodiment;
Fig. 19 shows a partially cut-away perspective view of a detail of the inventive support, according to a different embodiment;

With reference to the figures, the support of the invention for a telescope 2 is generally indicated with 1.

The telescope 2, which is schematically illustrated in form of a cylinder, can be of any type, though preferably will be a reflector telescope, such as a Newton, Dobson, Cassegrain, Schmidt-Cassegrain, catadioptric telescope, and variants thereof. This type of telescopes comprises a primary mirror, of which the diameter, focal length and optical configuration determine the luminosity and contrast of the image, and a more or less complicated optical system that conveys the image to an eyepiece, which will be responsible for the magnification thereof. As compared with refractor telescopes, reflection telescopes can be made with larger optics, while maintaining compactness and lightness. Furthermore, they are much less expensive than refractor ones, at the same optical aperture, and thus are the ones which are commonly selected by amateur users.

The support 1 comprises a mount 3 and means for resting 4 said mount 3 on the ground.

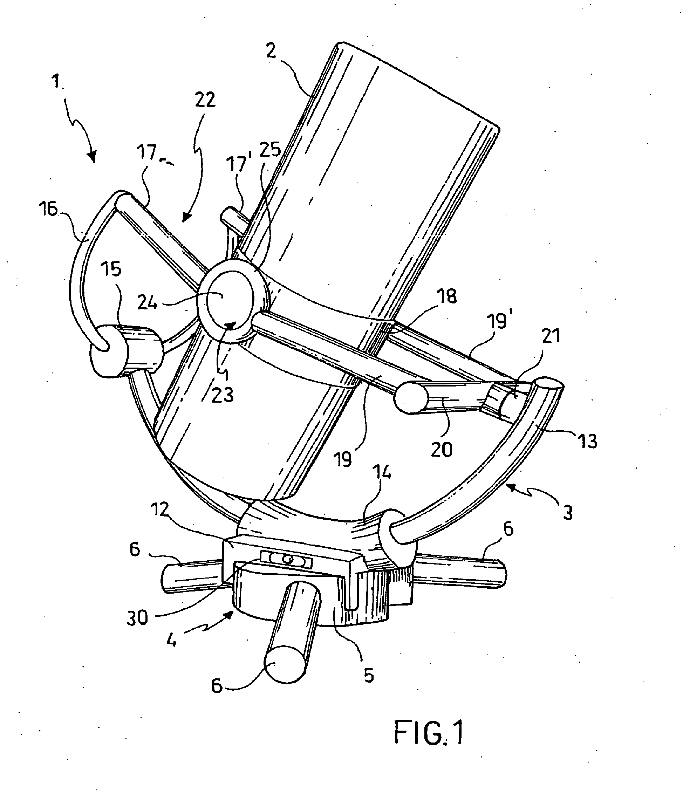

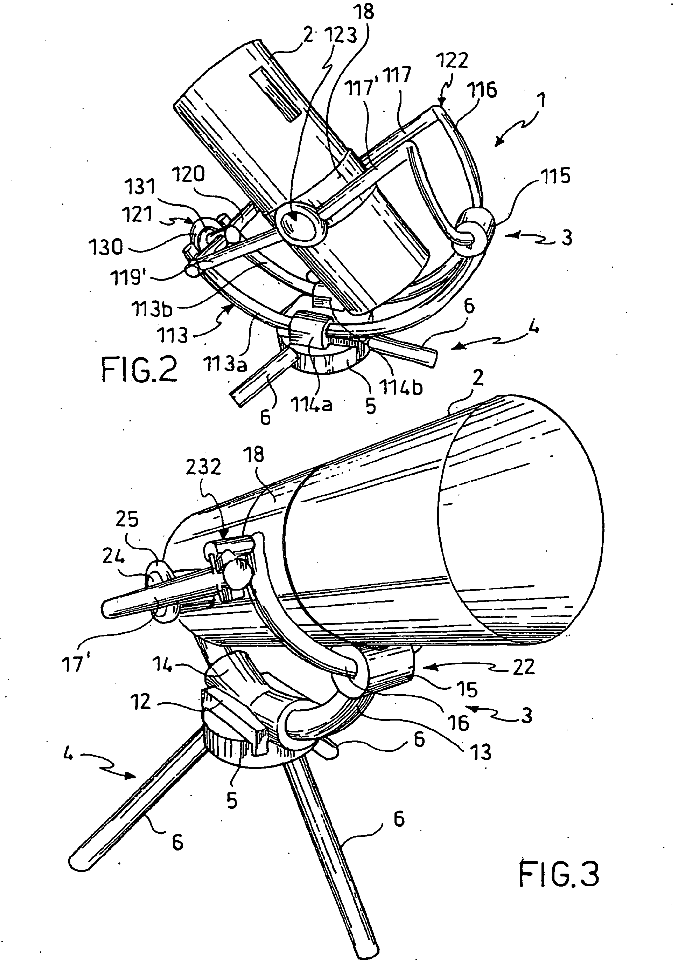

The rest means 4 shown in Fig. 1 are a low basement comprising a base element 5 to which three or more legs 6 are fastened such as to be radially projected therefrom. On the other hand, in the embodiment from Fig. 3, the rest means 4 are shaped as a traditional tripod, which provides to hold the mount 3 raised from the ground.

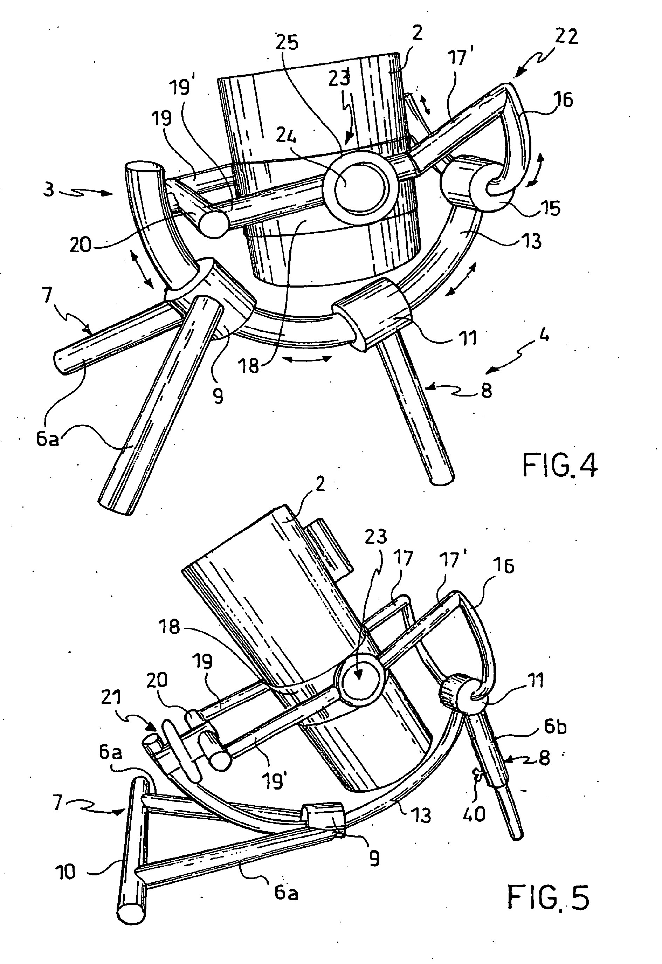

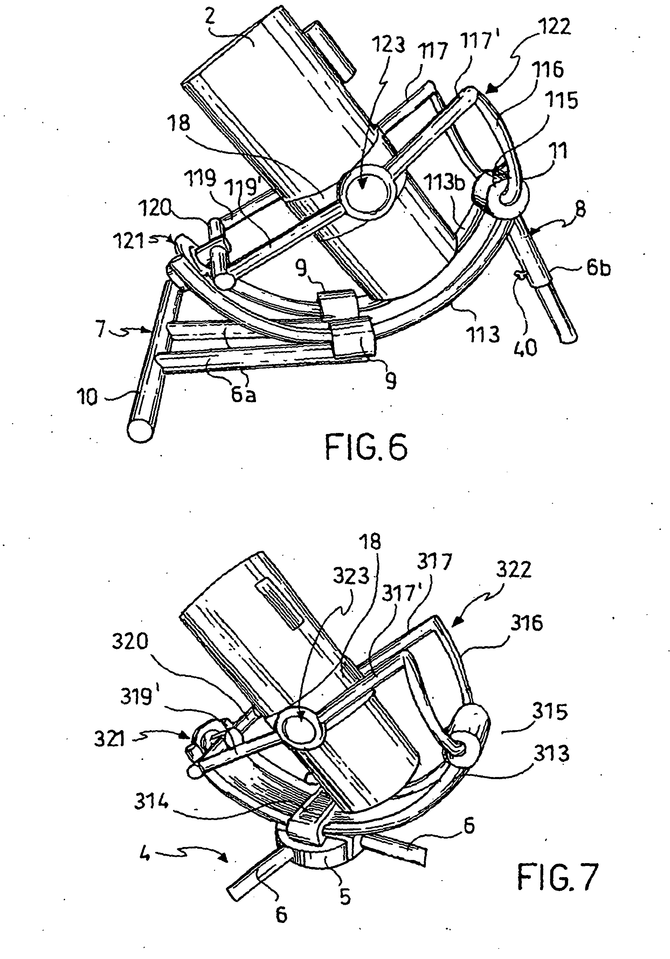

Fig. 4, 5, and 6 show different embodiments of the rest means 4 comprising a first rest element 7 and a second rest element 8, which are separately connected to the mount 3. The first rest element 7 comprises means 9 for connection to the mount 3; two legs 6a starting therefrom (Fig. 4), which may be joined at both ends by a bar 10 that increases the rest surface thus favouring the system stability. The second rest element 8 comprises, in turn, means 11 for connection to the mount 3, and an extensible leg 6b. The extensible leg 6b has the function of allowing the rest means 4 to be adapted as a function of the different operating latitudes of the telescope, such as will be described in greater detail below. A typical embodiment of an extensible leg 6b is a telescopic leg (shown in Fig. 5 and 6) with conventional stop means 40, such as a screw or clamping ring.

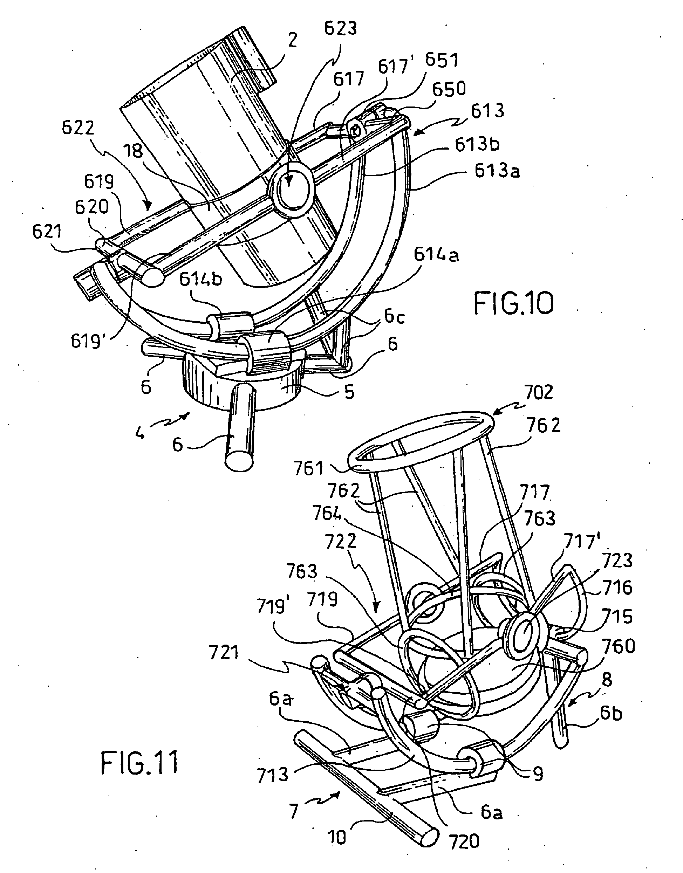

The variant of the rest means 4 as shown in Fig. 10 provides a base element 5 and legs 6, which are completely similar to the embodiment in Fig. 1. From one of the legs 6, however, there starts a pair of feet 6c, which are arranged in a V shape and rest on the two elements 613a, 613b of the mount 613, such as to increase the stability of the assembly.

The mount 3 is removably fixed to the base element 5 by means of a coupling element 12. This coupling element 12 is anchored to the base element 5 by means of suitable removable fixing means that are suitable to firmly stop the two elements, such as suitably dimensioned fixing screws. In the embodiment from Fig. 1, the coupling element 12 comprises a C-shaped bracket which is placed astride the base element 5.

The mount 3 is an equatorial mount and is characterized in that it comprises a circle-arc shaped primary rocking element 13, also said the "declination element", which has the capacity of rotating about its geometrical center. The primary rocking element 13 is slidingly housed in a first sliding element 14, which is integral with the coupling element 12.

To an end of said declination element 13 there is fixed a second sliding element 15, which slidingly houses a secondary circle arc-shaped rocking element 16, which is arranged on a plane perpendicular to that on which the declination element 13 is laid. The amplitude of this secondary rocking element 16 ranges between more than 180° and 200°, and the arc of circle has a greater diameter than the tube of the telescope 2.

At both ends of the secondary rocking element 16 there are fastened respective bars 17, 17', which connect this secondary rocking element 16 to holding means 18 for the telescope 2. A second pair of bars 19, 19' that ends at the other end with a connecting rod 20 joins these holding means 18 to the declination element 13, by means of pivoting joining means 21. A frame 22 is thus formed, which due to these pivoting joining means and said secondary rocking element 16, allows the telescope 2 being held thereon to rotate about the right ascension axis.

The holding means 18 are pivotally connected to the bars 17, 17', 19, 19' of the frame 22 via articulation means 23 allowing the telescope 2 to rotate about the declination axis.

The bars 17, 17' connecting the articulation means 23 at the ends of the secondary rocking element 16 are not aligned with the second bars 19, 19', but they are inclined upwards. This configuration derives from the fact that the secondary rocking element 16 has an amplitude greater than 180°, such as to allow the telescope 2 to rotate about the polar axis along the whole 180° tract as required, without being hindered by the bulk of the bars 17, 17' that would otherwise restrain its rotation.

The fact that said secondary rocking element 16 is circle arc-shaped and has a greater diameter than the tube of the telescope 2 is dictated by the advantage of being able to accommodate the tube of the telescope 2, if the latter is longer than the bars 17, 17', and thus allowing one to observe a wider celestial field. In fact, in operation (as will be described in greater detail below), the declination element 13 is rotated in order to cause the inclination of the frame 22 until the axis of the bars 19, 19' is aligned with the polar axis. In this condition, the secondary rocking element 16 rotates about the polar axis and the observation of objects proximate to the Celestial Pole can be carried out only if the telescope 2 is capable of being aligned with the polar axis: this movement is allowed by the particular semicircular shape of the secondary rocking element 16 which creates an observation window in that difficult position.

The articulation means 23 shown in Fig. 1 comprise a pivot 24 integral with the holding means 18, which is pivotally coupled to an annular seat 25 integral with the bars 17, 19, which is provided with suitable bearings, such as thrust bearings. A similar structure will be naturally provided on the opposite side, at the bars 17', 19' .

The holding means 18 are normally band-shaped and are preferably lined on the internal side thereof with a material that is suitable to dampen the vibrations and has a high friction coefficient, such as to prevent the tube of the telescope 2 from sliding, even when it is in a much inclined position. This material will be, for example, an elastomer or felt or whatever is normally used in these applications.

The holding means 18 will be further structured such as to remove or cause the tube of telescope 2 to slide, according to the mounting/dismounting or adjustment requirements (e.g., in order to obtain a perfect balance of the optical parts on the support 1), and thus will comprise clamping means for the telescope 2. These means for clamping the telescope 2 to the support 1 are well known and therefore will not be described in greater detail below. For example, the holding means 18 can be formed by two semicircular bands which are hinged at one end thereof and comprise suitable clamping means at the other end thereof. Alternatively, the holding means 18 can be provided with clamping screws directly acting on the body of telescope 2. Other systems can be obviously used, without however departing from the scope of the present invention.

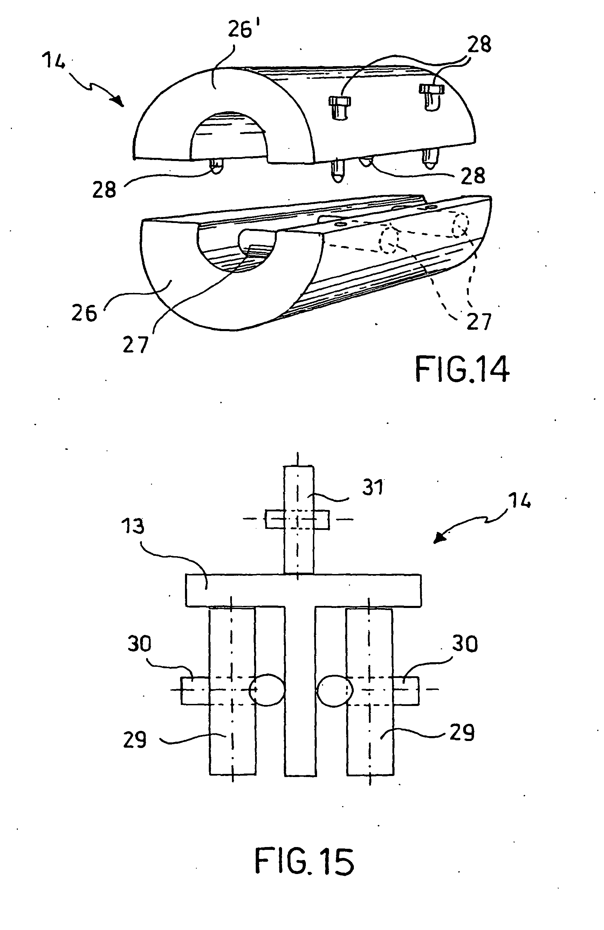

Fig. 14 and 15 show two exemplary embodiments of the sliding elements 14, 15. In Fig. 14, a detail is shown of the primary sliding element 14. Said element 14 is tubular and formed by two hollow semi-cylinders 26, 26', the sliding means 27 (such as rolls or balls) being arranged within at least one of them, such as to create a roller bearing, which is dimensioned according to the load to which they have to be subjected. Suitable clamping means, such as screws 28, provide to removably connect the two semi-cylinders 26, 26'. These clamping means further provide either to stop or loosen the sliding of the declination element 13, thereby allowing the same to be adjusted according to the latitude of the place in which the observation is carried out. To this purpose, to the declination element 13 there will be generally associated a graduated scale to allow the adjustment to be carried out at the desired latitude.

The primary (declination element) 13 and secondary 16 rocking elements shown in Fig. 1 have a round section. Elements can be used, however, which have a different section, such as elliptical, square, rectangular, and particularly T-shaped or I-shaped. With the latter two types a greater resistance will be obtained for the structure at a same area of the section. Accordingly, Fig. 15 shows an embodiment of the mechanism of the primary sliding elements 14 as seen in the crosswise direction, in which the primary rocking element 13 has a T-shaped section. The T-shaped element slides by being rested on a pair of wheels 29 that are placed on the two sides of the vertical portion and below the horizontal portions of the T-shaped element. The wheels 29 are pivoted on shafts 30 which, at the inner end thereof facing the T-shaped element, house a ball, which is, in turn, slidingly abutted against the vertical portion of the T-shaped element. A further wheel 31 is placed above the horizontal portion of the T-shaped element, which provides to hold the T-shaped element pressed against the lower wheels 29. One or more sets of wheels 29, 31 may be arranged within the primary sliding elements 14.

The secondary sliding elements 15 for the secondary rocking element 16 are substantially provided in the same way, but they do not require clamping means for stopping the movement of the rocking element 16. In fact, this secondary rocking element 16 will have to be free of sliding during observation.

The pivoting joining means 21 and the articulation means 23 will be preferably provided with friction means in order to allow positioning the telescope 2 in the desired position and holding the same in this position. Furthermore, an actuating knob and/or a graduated scale indicating the celestial coordinates can be associated to said pivoting joining means 21 and said articulation means 23.

Alternatively, said pivoting joining means 21 and said articulation means 23 will be provided with a suitable motor drive. The typology of motors to be used can be selected among alternating or direct current motors, stepping, brushless or toroidal motors, according to particular requirements, such as to allow both the pointing and automatic tracking of the celestial body to be observed. This application is particularly advisable in the field of astronomical photography.

The motors must preferably allow for reversible motion.

The motor to be applied to the RA axis (at the pivoting joining means 21) must be provided with such an operating speed to allow the RA axis to perform a full turn over a period of 23 hours, 56 minutes and 4.091 seconds, i.e. as long as the Earth takes to rotate about its own axis, to which the apparent motion of the celestial bodies is linked. During the observation of a celestial body having apparent motion, the motor applied to the articulation means 23 - the so-called declination motor - should remain still. Actually, due to small defects in the observation setting, slight inaccuracies in the gears and other factors, declination corrections are required during star tracking. Therefore, on the one hand, the right ascension motor must be capable of accelerating or decelerating the motion according to the requirements, on the other hand, the declination motor must be capable of moving in the two directions in order to correct northbound or southbound drifts.

The support 1 of the invention may also comprise a command and control unit (CCU). With the traditional motors, the CCU calculates the position of the telescope from the number of revolutions of the motor. In case of paired stepping motors, the CCU counts the number of steps made in the two directions by each one of the motors and consequently determines the exact position adopted by the telescope. Brushless motors have a built-in CCU, which allows for an even more accurate control of the movements, speeds and positions. The CCU may have a memory in which the celestial coordinates of a list of observable celestial bodies are stored, which allows automatically pointing the telescope 2 to the selected object.

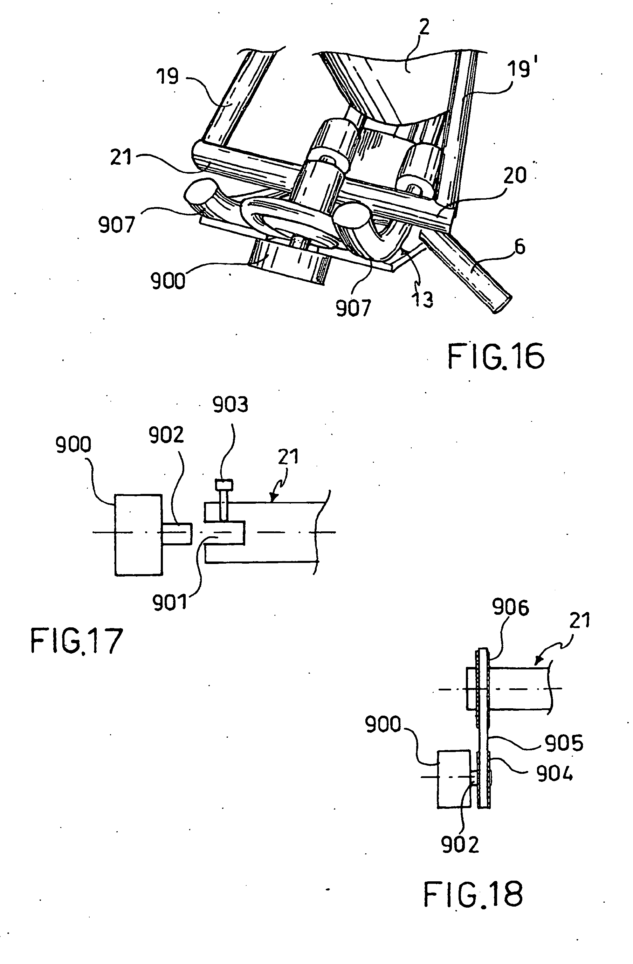

In Fig. 16 and 17 there is shown a possible mounting of the right ascension motor 900 to the pivoting joining means 21. The shaft 902 of the motor 900 is co-axially fitted in a suitable seat 901 that is formed in the pivot of the means 21. Fixing means, such as a screw 903, provide to fix the shaft 902 to the seat 901. The motor 900 is thus supported by plates 907 that are fixed to the primary rocking element 13.

The motor drive may be similarly mounted to the declination axis, coaxially to the articulation means 23.

In Fig. 18 a different embodiment is shown, in which the motor 900 is offset relative to the pivoting joining means 21 (or the articulation means 23, not shown, respectively). In this case, the transmission of motion will occur by means of a suitable belt or chain 905 geared on pinions 904, 906 that are associated to the shaft 902 of motor 900 and to the pivot of the means 21, respectively.

In Fig. 2 there is shown a second embodiment of the support 1 of the invention. In this embodiment, the primary rocking element (declination element) 113 consists of two circle arc-shaped bars 113a, 113b sliding within respective primary sliding elements 114a, 114b. At the one end, the circle arc-shaped bars 113a, 113b are joined to the secondary sliding element 115, while at the other end, they are fixed to an annular element 130. The annular element 130 is pivotally coupled - by means of suitable bearings - to a pivot 131 that is connected to the frame 122, particularly to the connecting rod 120 of the bars 119' and 119 (not seen in the perspective view of Fig. 2)

All the remaining parts of the support 1 are perfectly similar to the corresponding parts as described above.

The advantage of this embodiment is that it provides the support with greater firmness and furthermore it allows for a comfortable visual access even when Cassegrain or catadioptric telescopes are used, with rear eyepiece.

In Fig. 3 a different embodiment of the mount 3 is shown. In this embodiment, the bars 17' and 19' are aligned such as to form an individual bar. The same happens with bars 17 and 19, not seen in the figure. At the end proximate to the secondary rocking element 16, the bars 17, 17' comprise a joint 232 substantially having the shape of a reversed L, which is arranged perpendicular to said bars 17, 17' such as to be joined to the ends of the secondary rocking element 16. Thereby, the arc of circle of said element 16 can have an amplitude greater than 180°, thus allowing the element 16 to perform the 180° full revolution, as required.

The embodiments in Fig. 4, 5 and 6 (already described above) differ from the versions in Fig. 1 and 2 because of a different configuration of the rest means. In these embodiments, the means 9, 11 connecting the primary rocking element 13 to the rest means 7, 8 also comprise the sliding means described above.

In Fig. 7 a different embodiment is shown, in which the primary rocking element 313 is formed by a circle arc-shaped band. The sliding element 314 will be consequently shaped. The greater contact surface of this version provides the support 1 with greater firmness.

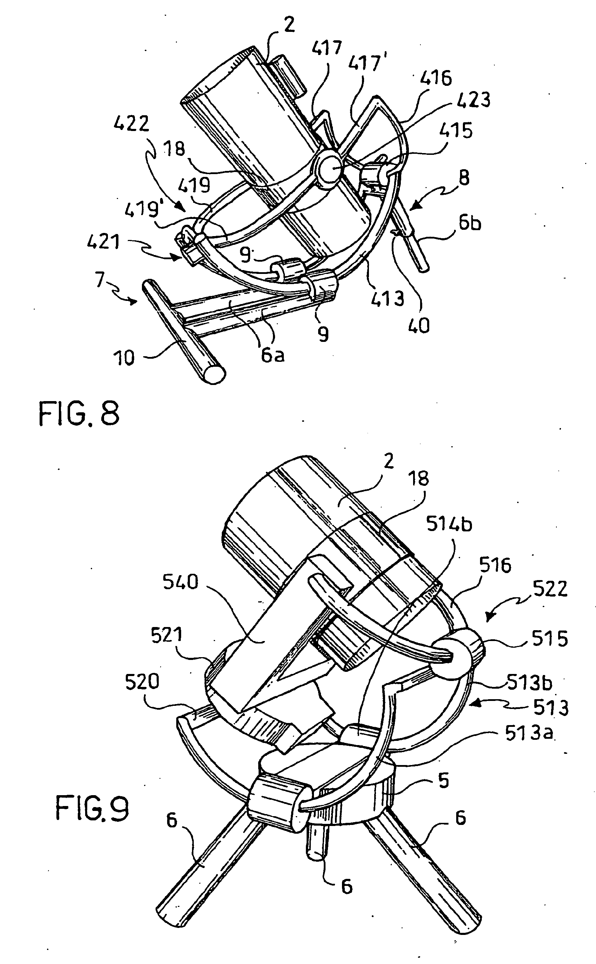

The version shown in Fig. 8, besides comprising the rest means 7, 8 from Fig. 6, also has a different shape of the bars 419, 419' for connection with the pivoting joining means 421. In this embodiment, in fact, the connecting rod 20 has been eliminated and the bars 419, 419' have been bent in the shape of an arc of circle such as to be joined with said means 421. This solution reduces the hindrance of the frame 422, thereby preventing the same to interfere, during the rotation about the RA axis, with the primary rocking element 413. In fact, it should be taken into account that the distance between the bars 17, 19 and 17', 19' is dictated by the diameter of the telescope 2 and that, with great diameters, the connecting rod 20 can collide with the declination element during the rotation of the frame. In the version in Fig. 8, as the limit for the telescope 2 diameter results from the diameter of the primary rocking element 413, it is greater when the bars 419, 419' are circle arc-shaped. It may also be provided that the connecting rod is circle arc-shaped or V-shaped, still for hindrance reduction purposes; or that the bars 419, 419', instead of adopting a circle arc-shaped profile, are joined according to a V-shaped profile.

Fig. 9 shows a further support 1 which is particularly adapted to a traditional fork mount. In this version, the telescope 2 is mounted on a conventional fork-like support 540, which, in turn, is connected, by means of pivoting joining means 521 to the rod 520 and hence to the primary rocking element 513. The other end of this primary rocking element 513 is fixed, such as in the versions above, to the secondary sliding element 515 of the secondary rocking element 516. The ends of the latter are fixed to the fork-shaped support 540 proximate to the ends of the fork's arms. This embodiments facilitates using the large sized Dobson telescopes, which are generally provided with altazimuth fork mounts, which - in order to be desirably turned into equatorial - would require a cantilevered equatorial head with consequent unbalancing of the loads and increase in vibrations. In fact, the fork mount adapted to the support of the invention has the advantage over the traditional equatorial head that it moves the barycentre of the system in the central position, without requiring the provision of counterweights or cantilevered parts.

The embodiment shown in Fig. 10 is a simplified version, in which the frame 622 is pivoted at the ends of the primary rocking element 613 by means of pivoting joining means 621, 651. Said frame 622 consists of connecting rods 620, 650 to which the bars 617, 619 and 617', 619' are connected. As in the versions above, these bars 617, 619 and 617', 619' are connected with the articulation means 623 allowing the telescope 2 to rotate about the declination axis. In this embodiment, the secondary rocking element has been omitted to the detriment of the freedom of observation in the region proximate to the Celestial Pole. However, the support retains the considerable advantage of perfect weight balance.

In Fig. 11 a further embodiment of the invention is shown, in which the support 1 is completely similar to that in Fig. 6, while the structure of the telescope 702 is substantially different. In this version, in fact, the telescope 702 is reduced to a frame structure consisting of a support base 760 for the primary mirror and a support ring 761 for the secondary mirror (not shown), which are joined by rods 762 and reinforcement rings 763. Another ring 764 that is arranged in the intermediate position between the support base 760 and the support ring 761 provides to connect the telescope 702 to the articulation means 723.

In a preferred embodiment, the support 1 of the invention will comprise latitude fine adjusting means. As said above, the primary rocking element (or declination element) 13 has a function of setting the latitude of the place in which the observation is carried out, by allowing the polar axis of the mount to be inclined to the extent required. This is, however a course adjustment.

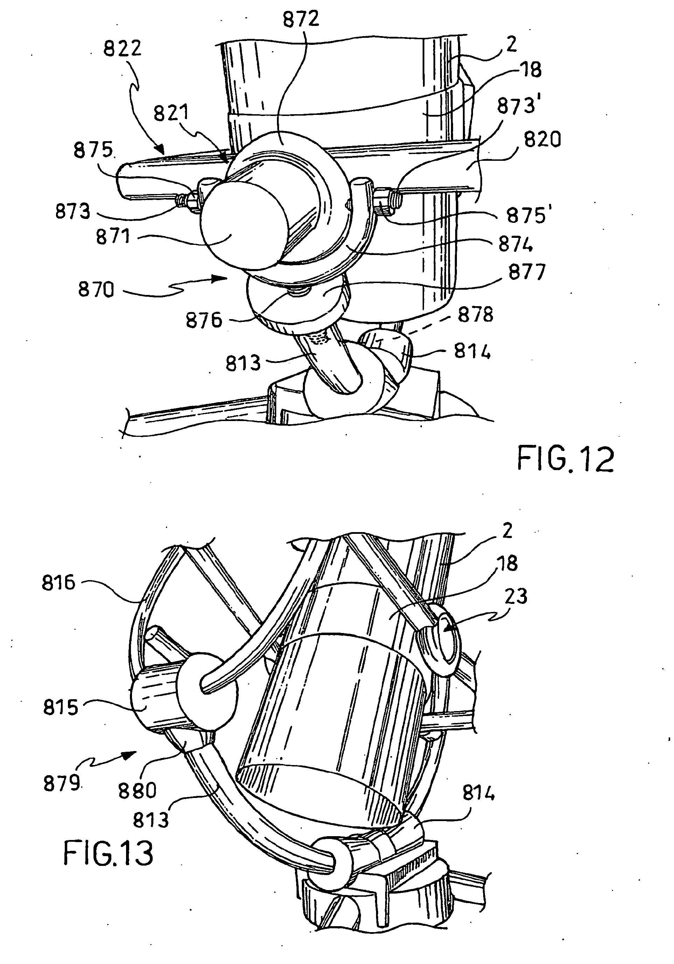

In order to obtain an accurate latitude setting, the support 1 may thus comprise the fine adjusting means 870. As shown in Fig. 12, the connecting rod 820 of the bars 19, 19' (not shown in the figure) comprises, in the middle, a pivot 871 that is aligned with the RA axis. The pivot 871 is pivotally housed in a bearing 872, preferably a roller bearing, more preferably a thrust roller bearing. This bearing 872 is connected to the declination element 813 by means of said fine adjusting means 870 that will be described below.

On both sides of the bearing 872, along an axis perpendicular to and intersecting the RA axis, there are arranged two threaded bars 873, 873' that pass through a support element 874, which in the example is shaped as a semicircular fork, but may have an annular shape or any other shape suitable to encompass the bearing. The support element 874 will thus comprise two threaded holes for the threaded bars 873, 873' to pass and act therethrough. The threaded bars 873, 873' pass through the support element 874 and emerge therefrom such as to be coupled to respective left-right adjusting knobs 875, 875', which in the example are embodied by nuts. When the one of said knobs is unscrewed and the other is screwed, and vice versa, a horizontal displacement, in the two directions, will be obtained for the bearing 872 and frame 822.

To the support element 874 there is fastened, along an axis perpendicular to and intersecting both RA axis and the axis on which the threaded bars 873, 873' lay, a threaded bar 876, the free end of which is coupled to a threaded hole which passes through a high-low adjusting knob 877. A further threaded bar 878 being fixed to an end of the declination element 813 is coupled to the same threaded hole of the high-low adjusting knob 877, though on the opposite side. The threaded bars 876, 878 have inverse threads, i.e. a left-hand one and a right-hand one, such that when the knob is rotated in one direction, a threaded bar will be unscrewed and the other will be screwed, and vice versa. When the high-low adjusting knob 877 is unscrewed/screwed, a vertical displacement will be then obtained, in the two directions, for the element 874, bearing 872 and frame 822 therewith.

Suitable graduated ring-nuts, preferably with vernier reading systems indicating the degrees and/or minutes and/or seconds of latitude, will be suitably associated with the adjusting knobs 875, 875', 877.

In order to allow performing the high-low (vertical) and left-right (horizontal) adjusting movements as described above without torsions occurring in that part of the RA axis that is exposed to the North, an articulation 879 is required to be provided for the declination element 813 at the connection with the sliding element 815 for the secondary rocking element 816. As shown in Fig. 13, this articulation 879 can comprise a ball 880 being arranged at the end of the declination element 813, which is housed in a suitable spherical seat that is formed in the sliding element 815. Each type of joint, either a ball joint or the like, may be used which is suitable to allow this movement.

Accordingly, the fine adjusting means 870, in addition to connecting the frame 822 of the mount to the declination element 813, also allow the latitude - and thus the inclination of the polar axis - to be accurately set as follows. First of all, the latitude is coarsely set by positioning the plane of the element 813 in coincidence with the plane of the local meridian, by causing the declination element 813 to slide within the corresponding sliding element 814 and locking the same in this position such as discussed above. At this stage, when the high-low adjusting knob 877 is suitably rotated, the support element 874 and thus the frame 822 will be moved away or close from/to the declination element 813 according to a vertical movement. On the other hand, when the left-right adjusting knobs 875, 875' are screwed/unscrewed, a horizontal movement of the frame 822 will be obtained relative to the support element 874 and thus the declination element 813. The latitude setting can be thus finely adjusted.

The support 1 may also comprise a bubble-level positioning means 30. This bubble-level positioning means 30 can be associated with the support means 4 or coupling element 12 (such as shown in Fig. 1) or any other part that remains motionless upon operation.

The support 1 can be made of any material commonly used in this applications, particularly iron, steel and/or aluminium. The perfect balance of the weights to be obtained with the inventive support, however, allows selecting lightweight materials, such as composite materials made of carbon fiber or light metals.

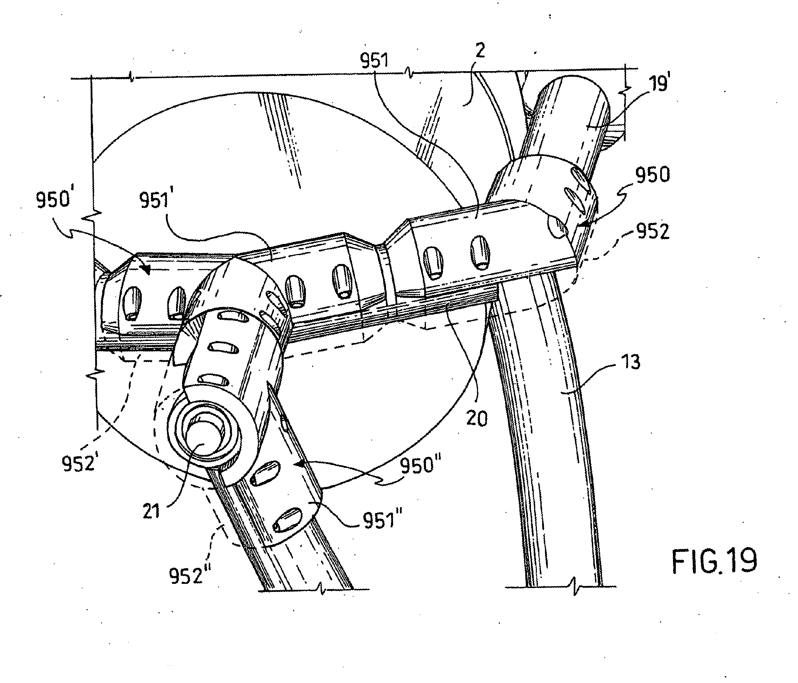

In a different embodiment of the invention, a detail thereof being shown in Fig. 19, a modular support is provided, i.e. the several elements composing the mount 3 (primary 13 and secondary 16 rocking elements, bars 17, 17', 19, 19', connecting rod 20, pivoting joining means 21, articulation means 23, etc.) are assembled by means of conventional removable joining elements 950, 950', 950", which are L-, V-, T-shaped according to the various mounting requirements. These joining elements 950, 950', 950" will be formed, for example, by two half-shells 951, 952; 951', 952'; 951", 952" to be assembled by means of setscrews, such as to enclose and lock the ends of two pieces to be joined. The whole structure can thus be easily dismounted, thereby improving transportation, or built in modules according to the requirements. For example, the telescope diameter may be changed without requiring a different support, by simply replacing those elements that are most suitable to the new size.

The advantages of the support for telescopes being the object of the present invention are clear and have been partially set forth above.

Particularly, the support 1 associates a perfect weight balance, which is normally typical with English mounts, with easy transportability which characterizes the fork or German equatorial mounts; which transportability is obtained both due to the lower weight and the adaptability to different latitudes that derives from the adjustability of the primary rocking element.

The lower weight and small bulk of the support, which is due to the particular compact structure, without cantilevered parts, allows also relatively large-sized telescopes to be also transported, such as those with mirrors of 50 cm diameter and more, which are normally intended for fixed stations.

The support of the invention does not require equatorial heads, balance counterweights or basement overweight, with a consequent saving of material and costs.

It will be appreciated that only some specific embodiments of the support for telescopes being the object of the present invention have been described herein, to which those skilled in the art will be able to make any and all modifications necessary for its adjustment to specific applications, without however departing from the scope of protection of the present invention.

For example, the primary rocking element may also not have the shape of an arc of circle, but for example any fork or squared C shape. In this case, the rocking effect will be performed by fastening this element to a suitable rocking support, such as a roller or other known rocking system. This solution may be obviously applied also to the circle arc-shaped primary rocking element as described above or the secondary rocking element, regardless of the same having the shape of an arc of circle or any other shape.

## Claims

1. A support (1) for a telescope (2, 702) comprising a mount (3) and means (4) for resting said mount (3) on the ground, wherein said mount (3) comprises a primary rocking element allowing one to set the latitude of the observation location, to said primary rocking element (13, 113, 313, 413, 513, 613, 713, 813) being pivotally fastened a frame (22, 122, 322, 422, 522, 622, 722, 822) which allows the movement of the telescope (2, 702) about the right ascension axis and/or about the declination axis,
wherein said primary rocking element (13, 113, 313, 413, 513, 613, 713, 813) is circle are shaped, wherein said frame (22, 122, 322, 422, 522, 622, 722, 822) comprises a secondary rocking element (16, 116, 316, 416, 516, 716, 816) which is circle are-shaped and has an amplitude of more than 180°, preferably ranging between more than 180° and 200°, and a diameter greater than the diameter of said telescope (2, 702), **characterized in that** said secondary rocking element (16, 116, 316, 416, 516, 716, 816) is arranged on a plane perpendicular to a plane on which said primary rocking element (13, 113, 313, 413, 513, 613, 713, 813) is laid and is movable within at least one secondary sliding element (15, 115, 315, 415, 515, 715, 815) fixed at an end of said primary rocking element (13, 113, 313, 413, 513, 613, 713, 813), at both ends of the secondary rocking element (16, 116, 316, 416, 516, 716, 816) respective bars (17, 17'; 117, 117'; 317, 317'; 417, 417'; 617, 617'; 717, 717') being fastened for connecting the secondary rocking element (16, 116, 316, 416, 516, 716, 816) to holding means (18) for the telescope (2, 702), a second pair of bars (19, 19'; 119, 119'; 319, 319'; 419, 419'; 619, 619'; 719, 719') joining said holding means (18) to the primary rocking element (13, 113, 313, 413, 513, 613, 713, 813) by means of pivoting joining means (21, 121, 321, 421, 621, 721, 821).

2. The support (1) for a telescope (2, 702) according to claim 1, wherein said primary rocking element (13, 113, 313, 413, 513, 613, 713, 813) is movable within at least one primary sliding element (14; 114; 9, 11; 314; 514; 614; 814).

3. The support (1) for a telescope (2, 702) according to any claim 1 to 2, wherein said primary rocking element (113, 413, 513, 613, 713) comprises two circle arc-shaped bars (113a, 113b) sliding within respective sliding elements (114a, 114b).

4. The support (1) for a telescope (2, 702) according to any claim 1 to 3, wherein the primary rocking element (313) is formed by a circle arc-shaped band.

5. The support (1) for a telescope (2, 702) according to any claim 1 to 4, wherein said second pair of bars (19, 19'; 119, 119'; 319, 319'; 419, 419'; 619, 619'; 719, 719') join said holding means (18) with a connecting rod (20, 120, 320, 520, 620, 720, 820) that is hinged to said primary rocking element (13, 113, 313, 413, 513, 613, 713, 813) via said pivoting joining means (21, 121, 321, 421, 621, 721, 821) allowing said frame (22, 122, 322, 422, 522, 622, 722, 822) to rotate about the right ascension axis.

6. The support (1) for a telescope (2, 702) according to claim 5, wherein said bars (17, 17'; 117, 117'; 317, 317'; 417, 417'; 617, 617'; 717, 717'; 19, 19'; 119, 119'; 319, 319'; 419, 419'; 619, 619'; 719, 719') Of the frame (22, 122, 322, 422, 522, 622, 722, 822) are pivotally connected to said holding means (18) via articulation means (23, 123, 323, 423, 623, 723) allowing the telescope (2, 702) to be rotated about the declination axis.

7. The support (1) for a telescope (2, 702) according to claim 5 or 6, wherein said holding means (18) are structured such as to be able to remove or cause the tube of the telescope (2, 702) to slide and comprise clamping means for said telescope (2, 702).

8. The Support (1) for telescope (2, 702) according to any claim 2 to 7, wherein said primary (14; 114; 9, 11; 314; 514; 614; 814) and secondary (15, 115, 315, 415, 515, 715, 815) sliding elements comprise sliding means (27), such as rolls or balls, such as to form a roller bearing.

9. The support (1) for a telescope (2, 702) according to claim 8, said primary sliding element (14; 114; 9, 11; 314; 514; 614; 814) comprising clamping means (28) for stopping or loosening the sliding movement of the primary rocking element (13, 113, 313, 413, 513, 613, 713, 813).

10. The support (1) for a telescope (2, 702) according to any claim 1 to 9, wherein said primary (13, 113, 313, 413, 513, 613, 713, 813) and/or secondary (16', 116, 316, 416, 516, 716, 816) rocking element, when provided, has an elliptical, square, rectangular, T- or I-shaped section,

11. The support (1) for a telescope (2, 702) according to claim 10, wherein said primary (13, 113, 313, 413, 513, 613, 713, 813) and/or secondary (15, 115, 315, 415, 515, 715, 815) rocking element, when provided, has a T-shaped section and slides within said primary (14; 114; 9, 11; 314; 514; 614; 814) and/or secondary (16, 116, 316, 416, 516, 716, 816), sliding elements, respectively, by resting on at least a pair of wheels (29) placed on the two sides of the vertical portion and below the horizontal portions of the T-shaped element, said wheels (29) being pivoted on shafts (30) that, at their inner end facing the T-shaped element house a ball within a suitable seat, which is, in turn, slidingly abutted against the vertical portion of the T-shaped element; at least one wheel (31) is placed above the horizontal portion of the T-shaped element, which provides to hold the T-shaped element pressed against the lower wheels (29).

12. The support (1) for a telescope (2, 702) according to any claim 6 to 11, wherein said pivoting joining means (21, 121, 321, 421, 521, 621, 721, 821) and said articulation means (23, 123, 323, 423, 521, 623, 723) are provided with frictional means to allow the telescope (2, 702) to be placed in the desired position and be held in this position.

13. The support (1) for a telescope (2, 702) according to any claim 6 to 11, wherein said pivoting joining means (21, 121, 321, 421, 521, 621, 721, 821) and said articulation means (23, 123, 323, 423, 521, 623, 723) are provided with motor drive to allow both automatic pointing and tracking of the celestial body to be observed.

14. The support (1) for telescope (2, 702) according to claim 13, wherein said motor drive is selected among direct or alternating current motors, stepping motors, brushless or toroidal motors.

15. The support (1) for a telescope (2, 702) according to any claim 1 to 14, said support (1) comprising a command and control unit to calculate the position of the telescope and control the movements, speeds and positions, whenever required.

16. The support (1) for a telescope (2, 702) according to claim 15, wherein said command and control unit comprises a memory in which there are stored the celestial coordinates of a list of observable celestial bodies, which allows for automatic pointing of the telescope (2, 702) to the selected object.

17. The support (1) for telescope (2, 702) according to any preceeding claim, wherein at the end proximate the secondary rocking element (16, 116, 316, 416, 516, 716, 816), the bars (17, 17') comprise a joint (232) substantially having the shape of an inversed L that is arranged perpendicular to said bars (17, 17') such as to be joined at the ends of the secondary rocking element (16, 116, 316, 416, 516, 716, 816).

18. The support (1) for a telescope (2, 702) according to any claim 5 to 17, wherein the bars (419, 419') are either bent in the shape of an arc of circle or form a V-shaped profile, such as to be directly joined to said pivoting joining means (421).

19. The support (1) for telescope (2, 702) according to any claim 5 to 17, wherein the connecting rod is either circle arc-shaped or V-shaped.

20. The support (1) for a telescope (2, 702) according to any claim 1 to 19, comprising latitude fine adjusting means (870).

21. The support (1) for a telescope (2, 702) according to claim 20, wherein said fine adjusting means (870) comprise a bearing (872) in which there is pivotally housed a pivot (871) that is aligned with the right ascension axis and fastened to the connecting rod (820) of the bars (19, 19'), on the two sides of said bearing (872), along an axis perpendicular to and intersecting the right ascension axis, there being arranged two threaded bars (873, 873') engaging respective threaded holes of a support element (874) of the bearing (872), said threaded bars (873, 873') being actuated by respective left-right adjusting knobs (875, 875'); to said support element (874) there being fastened, along an axis perpendicular to and intersecting both the right ascension axis and the axis on which said threaded bars (873, 873') lay, a threaded bar (876), the free end of which is rotatably coupled with a threaded hole that passes through a high-low adjusting knob (877); said high-low adjusting knob (877) being rotatably coupled with a further threaded bar (878) that is fixed to an end of the primary rocking element (813); said threaded bars (876, 878) having contrary threadings, i.e. a left-hand one and a right-hand one, such that, when the knob is rotated in one direction, a threaded bar will be unscrewed and the other will be screwed, and vice versa.

22. The support (1) for a telescope (2, 702) according to claim 21, wherein said primary rocking element (813) comprises an articulation (879) at the connection with the secondary sliding element (815).

23. The support (1) for a telescope (2, 702) according to claim 22, wherein said articulation (879) comprises a ball (880) arranged at the end of the primary rocking element (813), which is housed in a suitable spherical seat that is formed in the secondary sliding element (815).

24. The support (1) for a telescope (2, 702) according to any claim 1 to 23, wherein said rest means (4) are selected from:
a) a low basement comprising a base element (5) to which three or more legs (6) are fastened such as to be radially projected therefrom;
b) a tripod to hold the mount (3) raised from the ground;
c) a first rest element (7) and a second rest element (8) that are separately connected to the mount (3) and comprising means (9, 11) for connection to the mount (3), legs (6a, 6b) starting therefrom, at least one of said legs (6b) being extensible.

25. The support (1) for a telescope (2, 702) according to claim 24, wherein said mount (3) is removably fixed to said base element (5) via a coupling element (12).

26. The support (1) for a telescope (2, 702) according to any claim 1 to 25, comprising bubble-level positioning means (30) that are preferably associated with said rest means (4) or said coupling element (12).

27. The support (1) for a telescope (2, 702) according to any claim 1 to 26, wherein said support (1) is made of iron, steel and/or aluminium and/or carbon fiber composite materials.

28. The support (1) for a telescope (2, 702) according to any claim 1 to 27, said support being modular and dismountable, wherein the elements forming the mount (3) that comprise primary (13) and secondary (16) rocking elements, bars (17, 17', 19, 19'), connecting rod (20), pivoting joining means (21) and articulation means (23) are assembled by means of removable joining elements (950, 950', 950").

29. An optical observation system comprising a telescope (2, 702) and a support (1) such as defined in any claim 1 to 28, wherein said telescope (2, 702) is selected from a Newton, Dobson, Cassegrain, Schmidt-Cassegrain, catadioptric telescope, and variants thereof.

30. The optical observation system according to claim 29, wherein said telescope (2, 702) has a primary mirror diameter greater than 40 cm, preferably equal to or greater than 50 cm.

31. The optical observation system according to claim 29 or 30, wherein said telescope (702) comprises a frame structure consisting of a support base (760) for the primary mirror and a support ring (761) for the secondary mirror, which are joined by rods (762) and reinforcement rings (763), a further ring (764) that is arranged intermediate between the support base (760) and the support ring (761), providing to connect the telescope (702) with the articulation means (723).

## Patentansprüche

1. Ein Träger (1) für ein Teleskop (2, 702), der eine Halterung (3) und eine Einrichtung (4) zum Abstellen der Halterung (3) auf dem Boden aufweist, wobei die Halterung (3) ein primäres Schaukelelement aufweist, das es ermöglicht, den Breitengrad des Beobachtungsorts einzustellen, wobei an dem primären Schaukelelement (13, 113, 313, 413, 513, 613, 713, 813) ein Rahmen (22, 122, 322, 422, 522, 622, 722, 822) schwenkbar befestigt ist, was die Bewegung des Teleskops (2, 702) um die Rektaszensionsachse und/oder um die Deklinationsachse erlaubt,
wobei das primäre Schaukelelement (13, 113, 313, 413, 513, 613, 713, 813) kreisbogenförmig ist, wobei der Rahmen (22, 122, 322, 422, 522, 622, 722, 822) ein sekundäres Schaukelelement (16, 116, 316, 416, 516, 716, 816) aufweist, das kreisbogenförmig ist und eine Amplitude von mehr als 180° aufweist, vorzugsweise im Bereich von zwischen mehr als 180° und 200°, und einen Durchmesser größer als den Durchmesser des Teleskops (2, 702), **dadurch gekennzeichnet, dass** das zweite Schaukelelement (16, 116, 316, 416, 516, 716, 816) auf einer Ebene senkrecht zu einer Ebene angeordnet ist, auf der das primäre Schaukelelement (13, 113, 313, 413, 513, 613, 713, 813) liegt und innerhalb zumindest eines sekundären Schiebeelements (15, 115, 315, 415, 515, 715, 815) bewegbar ist, das an einem Ende des primären Schaukelelements (13, 113, 313, 413, 513, 613, 713, 813) befestigt ist, wobei an beiden Enden des sekundären Schaukelelements (16, 116, 316, 416, 516, 716, 816) entsprechende Stäbe (17, 17'; 117, 117'; 317, 317'; 417, 417'; 617, 617'; 717, 717') zum Verbinden des sekundären Schaukelelements (16, 116, 316, 416, 516, 716, 816) mit einer Halteeinrichtung (18) für das Teleskop (2, 702) befestigt sind, wobei ein zweites Paar aus Stäben (19, 19'; 119, 119'; 319, 319'; 419, 419'; 619, 619'; 719, 719') die Halteeinrichtung (18) mit dem primären Schaukelelement (13, 113, 313, 413, 513, 613, 713, 813) mit Hilfe einer Schwenkverbindungseinrichtung (21, 121, 321, 421, 621, 721, 821) verbindet.

2. Der Träger (1) für ein Teleskop (2, 702) gemäß Anspruch 1, bei dem das primäre Schaukelelement (13, 113, 313, 413, 513, 613, 713, 813) innerhalb von zumindest einem primären Schiebeelement (14; 114; 9, 11; 314; 514; 614; 814) bewegbar ist.

3. Der Träger (1) für ein Teleskop (2, 702) gemäß einem der Ansprüche 1 bis 2, bei dem das primäre Schaukelelement (113, 413, 513, 613, 713) zwei kreisbogenförmige Stäbe (113a, 113b) aufweist, die innerhalb entsprechender Schiebeelemente (114a, 114b) gleiten.

4. Der Träger (1) für ein Teleskop (2, 702) gemäß einem der Ansprüche 1 bis 3, bei dem das primäre Schaukelelement (313) durch ein kreisbogenförmiges Band gebildet ist.

5. Der Träger (1) für ein Teleskop (2, 702) gemäß einem der Ansprüche 1 bis 4, bei dem das zweite Paar aus Stäben (19, 19'; 119, 119'; 319, 319'; 419, 419'; 619, 619'; 719, 719') die Halteeinrichtung (18) mit einer Verbindungsstange (20, 120, 320, 520, 620, 720, 820) verbindet, die an dem primären Schaukelelement (13, 113, 313, 413, 513, 613, 713, 813) über die Schwenkverbindungseinrichtung (21, 121, 321, 421, 621, 721, 821) drehbar ist, wodurch erlaubt wird, dass sich der Rahmen (22, 122, 322, 422, 522, 622, 722, 822) um die Rektaszensionsachse dreht.

6. Der Träger (1) für ein Teleskop (2, 702) gemäß Anspruch 5, bei dem die Stäbe (17, 17'; 117, 117' ; 317, 317'; 417, 417'; 617, 617'; 717, 717'; 19, 19'; 119, 119'; 319, 319'; 419, 419'; 619, 619'; 719, 719') des Rahmens (22, 122, 322, 422, 522, 622, 722, 822) schwenkbar mit der Halteeinrichtung (18) über eine Gelenkverbindungseinrichtung (23, 123, 323, 423, 623, 723) verbunden sind, wodurch ermöglicht wird, dass das Teleskop (2, 702) um die Deklinationsachse gedreht wird.

7. Der Träger (1) für ein Teleskop (2, 702) gemäß einem der Ansprüche 5 oder 6, bei dem die Halteeinrichtung (18) derart strukturiert ist, um in der Lage zu sein, die Röhre des Teleskops (2, 702) zu entfernen oder zu verursachen, dass dieselbe gleitet, und eine Klemmeinrichtung für das Teleskop (2, 702) aufweist.

8. Der Träger (1) für ein Teleskop (2, 702) gemäß einem der Ansprüche 2 bis 7, bei dem das primäre (14; 114; 9, 11; 314; 514; 614; 814) und das sekundäre (15, 115, 315, 415, 515, 715, 815) Schiebeelement eine Schiebeeinrichtung (27) aufweisen, wie z. B. Rollen oder Kugeln, um ein Kugellager zu bilden.

9. Der Träger (1) für ein Teleskop (2, 702) gemäß Anspruch 8, bei dem das primäre Schiebeelement (14; 114; 9, 11; 314; 514; 614; 814) eine Klemmeinrichtung (28) zum Stoppen oder Lockern der Schiebebewegung des primären Schaukelelements (13, 113, 313, 413, 513, 613, 713, 813) aufweist.

10. Der Träger (1) für ein Teleskop (2, 702) gemäß einem der Ansprüche 1 bis 9, bei dem das primäre (13, 113, 313, 413, 513, 613, 713, 813) und/oder sekundäre (16, 116, 316, 416, 516, 716, 816) Schaukelelement, wenn sie vorgesehen sind, einen elliptischen, quadratischen, rechteckigen, T- oder I-förmigen Querschnitt aufweisen.

11. Der Träger (1) für ein Teleskop (2, 702) gemäß Anspruch 10, bei dem das primäre (13, 113, 313, 413, 513, 613, 713, 813) und/oder das sekundäre (15, 115, 315, 415, 515, 715, 815) Schaukelelement, wenn sie vorgesehen sind, einen T-förmigen Querschnitt aufweist und innerhalb des primären (14; 114; 9, 11; 314; 514; 614; 814) und/oder sekundären (15, 115, 315, 415, 515, 715, 815) Schiebeelements gleitet, durch Ruhen auf zumindest einem Paar aus Rädern (29), die auf den zwei Seiten des vertikalen Abschnitts und unter den horizontalen Abschnitten des T-förmigen Elements platziert sind, wobei die Räder (29) auf Wellen (30) gedreht werden, die, wobei sie an ihrem inneren Ende dem T-förmigen Element zugewandt sind, eine Kugel in einem geeigneten Sitz unterbringen, der seinerseits schiebbar gegen den vertikalen Abschnitt des T-förmigen Elements ansteht; zumindest ein Rad (31) über dem horizontalen Abschnitt des T-förmigen Elements platziert ist, das vorgesehen ist, um das T-förmige Element gegen die unteren Räder (29) gedrückt zu halten.

12. Der Träger (1) für ein Teleskop (2, 702) gemäß einem der Ansprüche 6 bis 11, bei dem die Schwenkverbindungseinrichtung (21, 121, 321, 421, 521, 621, 721, 821) und die Gelenkverbindungseinrichtung (23, 123, 323, 423, 523, 623, 723) mit einer Reibungseinrichtung versehen sind, um zu ermöglichen, dass das Teleskop (2, 702) in der gewünschten Position platziert und in dieser Position gehalten wird.

13. Der Träger (1) für ein Teleskop (2, 702) gemäß einem der Ansprüche 6 bis 11, bei dem die Schwenkverbindungseinrichtung (21, 121, 321, 421, 521, 621, 721, 821) und die Gelenkverbindungseinrichtung (23, 123, 323, 423, 523, 623, 723) mit einem Motorantrieb versehen sind, um sowohl ein automatisches Zeigen als auch Verfolgen des Himmelskörpers zu ermöglichen, der beobachtet werden soll.

14. Der Träger (1) für ein Teleskop (2, 702) gemäß Anspruch 13, bei dem der Motorantrieb ausgewählt ist aus Gleich- oder Wechselstrommotoren, Schrittgebermotoren, bürstenlosen Motoren oder toroidalen Motoren.

15. Der Träger (1) für ein Teleskop (2, 702) gemäß einem der Ansprüche 1 bis 14, wobei der Träger (1) eine Befehls- und Steuerungseinheit aufweist, um die Position des Teleskops zu berechnen und die Bewegungen, Geschwindigkeiten und Positionen wann immer erforderlich zu steuern.

16. Der Träger (1) für ein Teleskop (2, 702) gemäß Anspruch 15, bei dem die Befehls- und Steuerungseinheit einen Speicher aufweist, in dem die Himmelskoordinaten einer Liste aus beobachtbaren Himmelskörpern gespeichert sind, was ein automatisches Zeigen des Teleskops (2, 702) auf das ausgewählte Objekt ermöglicht.

17. Der Träger (1) für ein Teleskop (2, 702) gemäß einem der vorhergehenden Ansprüche, bei dem an dem Ende in der Nähe zu dem zweiten Schaukelelement (16, 116, 316, 416, 516, 716, 816) die Stäbe (17, 17') ein Gelenk (232) aufweisen, das im Wesentlichen die Form eines umgekehrten L aufweist, das senkrecht zu den Stäben (17, 17') angeordnet ist, um an den Enden des sekundären Schaukelelements (16, 116, 316, 416, 516, 716, 816) verbunden zu sein.

18. Der Träger (1) für ein Teleskop (2, 702) gemäß einem der Ansprüche 5 bis 17, bei dem die Stäbe (419, 419') entweder in der Form eines Kreisbogens oder der Form eines V-förmigen Profils gebogen sind, um direkt mit der Schwenkverbindungseinrichtung (421) verbunden zu sein.

19. Der Träger (1) für ein Teleskop (2, 702) gemäß einem der Ansprüche 5 bis 17, bei dem die Verbindungsstange entweder kreisbogenförmig oder V-förmig ist.

20. Der Träger (1) für ein Teleskop (2, 702) gemäß einem der Ansprüche 1 bis 19, der eine Breitengradfeineinstellungseinrichtung (870) aufweist.

21. Der Träger (1) für ein Teleskop (2, 702) gemäß Anspruch 20, bei dem die Feineinstellungseinrichtung (870) ein Lager (872) aufweist, in dem ein Zapfen (871) drehbar gelagert ist, der mit der Rektaszensionsachse ausgerichtet ist und an der Verbindungsstange (820) der Stäbe (19, 19') befestigt ist, auf den zwei Seiten des Lagers (872), entlang einer Achse senkrecht zu und sich schneidend mit der Rektaszensionsachse,
wobei zwei Gewindestangen (873, 873') angeordnet sind und entsprechende Gewindelöcher eines Trägerelements (874) des Lagers (872) in Eingriff nehmen, wobei die Gewindestangen (873, 873') durch entsprechende Links-Rechts-Einstellknöpfe (875, 875') befestigt werden;
wobei an dem Trägerelement (874) entlang einer Achse senkrecht zu und sich schneidend mit sowohl der Rektaszensionsachse als auch der Achse, auf der die Gewindestangen (873, 873') liegen, eine Gewindestange (876) befestigt ist, wobei das freie Ende derselben drehbar mit einem Gewindeloch gekoppelt ist, das durch einen Rauf-Runter-Einstellknopf (877) verläuft; wobei der Rauf-Runter-Einstellknopf (877) drehbar mit einer weiteren Gewindestange (878) gekoppelt ist, die an einem Ende des primären Schaukelelements (813) befestigt ist, wobei die Gewindestangen (876, 878) gegenläufige Gewinde aufweisen, d. h. ein linkes und ein rechtes, derart, dass, wenn der Knopf in einer Richtung gedreht wird, eine Gewindestange entschraubt wird und die andere eingeschraubt wird, und umgekehrt.

22. Der Träger (1) für ein Teleskop (2, 702) gemäß Anspruch 21, bei dem das primäre Schaukelelement (813) eine Gelenkverbindung (879) an der Verbindung mit dem sekundären Schiebeelement (815) aufweist.

23. Der Träger (1) für ein Teleskop (2, 702) gemäß Anspruch 22, bei dem das Gelenk (879) eine Kugel (880) aufweist, die an dem Ende des primären Schaukelelements (813) angeordnet ist, die in einem geeigneten sphärischen Sitz untergebracht ist, der in dem sekundären Schiebeelement (815) gebildet ist.

24. Der Träger (1) für ein Teleskop (2, 702) gemäß einem der Ansprüche 1 bis 23, bei dem die Abstelleinrichtung (4) ausgewählt ist aus:
a) einem niedrigen Fundament, das ein Basiselement (5) aufweist, an dem drei oder mehr Schenkel (6) derart befestigt sind, um radial daraus hervorzustehen;
b) einem Dreifuß, um die Befestigung (3) zu halten, die aus dem Boden hervorsteht;
c) einem erstes Abstellelement (7) und einem zweiten Abstellelement (8), die separat mit der Halterung (3) verbunden sind und eine Einrichtung (9, 11) aufweisen zur Verbindung mit der Halterung (3), Schenkel (6a, 6b), die daraus hervorgehen, wobei zumindest einer der Schenkel (6b) erweiterbar ist.

25. Der Träger (1) für ein Teleskop (2, 702) gemäß Anspruch 24, bei dem die Befestigung (3) entfernbar an dem Basiselement (5) über ein Kopplungselement (12) befestigt ist.

26. Der Träger (1) für ein Teleskop (2, 702) gemäß einem der Ansprüche 1 bis 25, der eine Blasenebenenpositionierungseinrichtung (30) aufweist, die vorzugsweise der Abstelleinrichtung (4) oder dem Kopplungselement (12) zugeordnet ist.

27. Der Träger (1) für ein Teleskop (2, 702) gemäß einem der Ansprüche 1 bis 26, wobei der Träger (1) aus Eisen, Stahl und/oder Aluminium und/oder Kohlefaserverbundmaterialien hergestellt ist.

28. Der Träger (1) für ein Teleskop (2, 702) gemäß einem der Ansprüche 1 bis 27, wobei der Träger modular und demontierbar ist, wobei die Elemente, die die Halterung (3) bilden, die primäre (13) und sekundäre (16) Schaukelelemente, Stäbe (17, 17', 19, 19'), einen Verbindungsstab (20), Schwenkverbindungseinrichtungen (21) und eine Gelenkverbindungseinrichtungen (23) aufweisen, mit Hilfe von entfernbaren Verbindungselementen (950, 950', 950") montiert sind.

29. Ein optisches Observationssystem, das ein Teleskop (2, 702) und einen Träger (1) aufweist, wie in einem der Ansprüche 1 bis 28 definiert ist, wobei das Teleskop (2, 702) ausgewählt ist aus einem Newton-, Dobson-, Cassegrain-, Schmidt-Cassegrain-, einem katadioptrischen Teleskop oder Varianten derselben.

30. Das optische Observationssystem gemäß Anspruch 29, bei dem das Teleskop (2, 702) einen Primärspiegeldurchmesser größer als 40 cm und vorzugsweise gleich oder größer als 50 cm aufweist.

31. Das optische Observationssystem gemäß Anspruch 29 oder 30, bei dem das Teleskop (702) eine Rahmenstruktur aufweist, die aus einer Trägerbasis (760) für den primären Spiegel und einem Trägerring (761) für den sekundären Spiegel besteht, die durch Stangen (762) und Verstärkungsringe (763) verbunden sind, einem weiteren Ring (764), der in der Mitte zwischen der Trägerbasis (760) und dem Trägerring (761) angeordnet ist und vorgesehen ist, um das Teleskop (702) mit der Gelenkverbindungseinrichtung (723) zu verbinden.

## Revendications

1. Support (1) de télescope (2, 702) comprenant une monture (3) et des moyens (4) d'appui de ladite monture (3) sur le sol, dans lequel ladite monture (3) comprend un élément basculant primaire permettant de régler la latitude du lieu d'observation, ledit élément basculant primaire (13, 113, 313, 413, 513, 613, 713, 813) étant fixé de façon pivotante à un châssis (22, 122, 322, 422, 522, 622, 722, 822) qui permet le mouvement du télescope (2, 702) autour de l'axe d'ascension droite et/ou autour de l'axe de déclinaison,
dans lequel ledit élément basculant primaire (13, 113, 313, 413, 513, 613, 713, 813) présente la forme d'un arc de cercle, dans lequel ledit châssis (22, 122, 322, 422, 522, 622, 722, 822) comprend un élément basculant secondaire (16, 116, 316, 416, 516, 716, 816) qui présente la forme d'un arc de cercle et a une amplitude de plus de 180°, de préférence comprise entre plus de 180° et 200°, et un diamètre supérieur au diamètre dudit télescope (2, 702), **caractérisé en ce que** ledit élément basculant secondaire (16, 116, 316, 416, 516, 716, 816) est agencé sur un plan perpendiculaire à un plan sur lequel est disposé ledit élément basculant primaire (13, 113, 313, 413, 513, 613, 713, 813) et **en ce qu'**il est mobile à l'intérieur d'au moins un élément coulissant secondaire (15, 115, 315, 415, 515, 715, 815) fixé à une extrémité dudit élément basculant primaire (13, 113, 313, 413, 513, 613, 713, 813), des barres respectives (17, 17' ; 117, 117' ; 317, 317' ; 417, 417' ; 6 1 7 , 617'; 717, 717') étant fixées aux deux extrémités de l'élément basculant secondaire (16, 116, 316, 416, 516, 716, 816) pour relier l'élément basculant secondaire (16, 116, 316, 416, 516, 716, 816) à des moyens de maintien (18) du télescope (2, 702), une deuxième paire de barres (19, 19' ; 119, 119' ; 319, 319' ; 419, 419' ; 619, 619' ; 719, 719') joignant lesdits moyens de maintien (18) à l'élément basculant primaire (13, 113, 313, 413, 513, 613, 713, 813) par l'intermédiaire de moyens de jonction pivotants (21, 121, 321, 421, 621, 721, 821).

2. Support (1) de télescope (2, 702) selon la revendication 1, dans lequel ledit élément basculant primaire (13, 113, 313, 413, 513, 613, 713, 813) est mobile à l'intérieur d'au moins un élément coulissant primaire (14 ; 114 ; 9, 11 ; 314 ; 514 ; 614 ; 814).

3. Support (1) de télescope (2, 702) selon l'une quelconque des revendications 1 et 2, dans lequel ledit élément basculant primaire (113, 413, 513, 613, 713) comprend deux barres ayant la forme d'un arc de cercle (113a, 113b) coulissant à l'intérieur d'éléments coulissants respectifs (114a, 114b).

4. Support (1) de télescope (2, 702) selon l'une quelconque des revendications 1 à 3, dans lequel l'élément basculant primaire (313) est formé d'une bande ayant la forme d'un arc de cercle.

5. Support (1) de télescope (2, 702) selon l'une quelconque des revendications 1 à 4, dans lequel ladite deuxième paire de barres (19, 19' ; 119, 119' ; 319, 319' ; 419, 419' ; 619, 619' ; 719, 719') joint lesdits moyens de maintien (18) à une tige transversale (20, 120, 320, 520, 620, 720, 820) qui s'articule sur ledit élément basculant primaire (13, 113, 313, 413, 513, 613, 713, 813) par l'intermédiaire desdits moyens de jonction pivotants (21, 121, 321, 421, 621, 721, 821) permettant audit châssis (22, 122, 322, 422, 522, 622, 722, 822) de tourner autour dudit axe d'ascension droite.

6. Support (1) de télescope (2, 702) selon la revendication 5, dans lequel lesdites barres (17, 17' ; 117, 117' ; 317, 317' ; 417, 417' ; 617, 617'; 717, 717' ; 19, 19' ; 119, 119' ; 319, 319'; 419, 419'; 619, 619' ; 719, 719') du châssis (22, 122, 322, 422, 522, 622, 722, 822) sont reliées de façon pivotante auxdits moyens de maintien (18) par l'intermédiaire de moyens d'articulation (23, 123, 323, 423, 623, 723) permettant de faire tourner le télescope (2, 702) autour de l'axe de déclinaison.

7. Support (1) de télescope (2, 702) selon la revendication 5 ou 6, dans lequel lesdits moyens de maintien (18) ont une structure permettant de retirer ou de faire coulisser le tube du télescope (2, 702) et comprennent des moyens de serrage dudit télescope (2, 702).

8. Support (1) de télescope (2, 702) selon l'une quelconque des revendications 2 à 7, dans lequel lesdits éléments coulissants primaires (14 ; 114 ; 9, 11 ; 314 ; 514 ; 614 ; 814) et secondaires (15, 115, 315, 415, 515, 715, 815) comprennent des moyens coulissants (27), tels que des rouleaux ou des billes, de façon à former un roulement à rouleaux.

9. Support (1) de télescope (2, 702) selon la revendication 8, ledit élément coulissant primaire (14 ; 114 ; 9, 11 ; 314 ; 514 ; 614 ; 814) comprenant des moyens de serrage (28) permettant d'arrêter ou de libérer le mouvement de coulissement de l'élément basculant primaire (13, 113, 313, 413, 513, 613, 713, 813).

10. Support (1) de télescope (2, 702) selon l'une quelconque des revendications 1 à 9, dans lequel ledit élément basculant primaire (13, 113, 313, 413, 513, 613, 713, 813) et/ou secondaire (16, 116, 316, 416, 516, 716, 816), lorsqu'il est présent, a une section transversale elliptique, carrée, rectangulaire, en forme de T ou de I.

11. Support (1) de télescope (2, 702) selon la revendication 10, dans lequel ledit élément basculant primaire (13, 113, 313, 413, 513, 613, 713, 813) et/ou secondaire (15, 115, 315, 415, 515, 715, 815), lorsqu'il est présent, a une section transversale en forme de T, et coulisse respectivement à l'intérieur desdits éléments coulissants primaires (14 ; 114 ; 9, 11 ; 314 ; 514 ; 614 ; 814) et/ou secondaires (16, 116, 316, 416, 516, 716, 816), en prenant appui sur au moins une paire de roues (29) placées sur les deux côtés de la partie verticale et en dessous des parties horizontales de l'élément en forme de T, lesdites roues (29) pivotant sur des arbres (30) qui, à leur extrémité intérieure tournée vers l'élément en forme de T, logent une bille à l'intérieur d'un siège approprié qui, quant à lui, coulisse en butée contre la partie verticale de l'élément en forme de T ; au moins une roue (31) est placée au-dessus de la partie horizontale de l'élément en forme de T, ce qui permet de maintenir l'élément en forme de T appuyé contre les roues inférieures (29).

12. Support (1) de télescope (2, 702) selon l'une quelconque des revendications 6 à 11, dans lequel lesdits moyens de jonction pivotants (21, 121, 321, 421, 521, 621, 721, 821) et lesdits moyens d'articulation (23, 123, 323, 423, 623, 723) sont munis de moyens de frottement permettant au télescope (2, 702) d'être placé à la position voulue et d'être maintenu à cette position.

13. Support (1) de télescope (2, 702) selon l'une quelconque des revendications 6 à 11, dans lequel lesdits moyens de jonction pivotants (21, 121, 321, 421, 521, 621, 721, 821) et lesdits moyens d'articulation (23, 123, 323, 423, 521, 623, 723) sont munis d'un moteur d'entraînement permettant à la fois un pointage et une poursuite automatique du corps céleste à observer.

14. Support (1) de télescope (2, 702) selon la revendication 13, dans lequel ledit moteur d'entraînement est sélectionné parmi des moteurs à courant continu ou alternatif, des moteurs pas à pas, des moteurs sans balais ou toroïdaux.

15. Support (1) de télescope (2, 702) selon l'une quelconque des revendications 1 à 14, ledit support (1) comprenant une unité de pilotage et de commande afin de calculer la position du télescope et de commander les mouvements, les vitesses et les positions lorsque cela est nécessaire.

16. Support (1) de télescope (2, 702) selon la revendication 15, dans lequel ladite unité de pilotage et de commande comprend une mémoire dans laquelle sont stockées les coordonnées célestes d'une liste de corps célestes pouvant être observés, cela permettant le pointage automatique du télescope (2, 702) vers l'objet sélectionné.

17. Support (1) de télescope (2, 702) selon l'une quelconque des revendications précédentes, dans lequel, à l'extrémité proche de l'élément basculant secondaire (16, 116, 316, 416, 516, 716, 816), les barres (17, 17') comprennent un joint (232) ayant sensiblement la forme d'un L inversé qui est agencé perpendiculairement auxdites barres (17, 17') de façon qu'il soit joint aux extrémités de l'élément basculant secondaire (16, 116, 316, 416, 516, 716, 816).

18. Support (1) de télescope (2, 702) selon l'une quelconque des revendications 5 à 17, dans lequel les barres (419, 419') soit sont coudées selon la forme d'un arc de cercle, soit ont la forme d'un profil en V, de façon qu'elles soient directement jointes auxdits moyens de jonction pivotants (421).

19. Support (1) de télescope (2, 702) selon l'une quelconque des revendications 5 à 17, dans lequel la tige transversale a soit la forme d'un arc de cercle, soit la forme d'un V.

20. Support (1) de télescope (2, 702) selon l'une quelconque des revendications 1 à 19, comprenant des moyens d'ajustement précis en latitude (870).

21. Support (1) de télescope (2, 702) selon la revendication 20, dans lequel lesdits moyens d'ajustement précis (870) comprennent un roulement (872) dans lequel est logé de façon pivotante un pivot (871) qui est aligné avec l'axe d'ascension droite et est fixé à la tige transversale (820) des barres (19, 19'), des deux côtés dudit roulement (872), le long d'un axe perpendiculaire à et coupant l'axe d'ascension droite, deux barres filetées (873, 873') étant prévues et s'engageant dans des trous filetés respectifs d'un élément de support (874) du roulement (872), lesdites barres filetées (873, 873') étant actionnées par des boutons d'ajustement gauche-droit respectifs (875, 875') ; une barre filetée (876) étant fixée audit élément de support (874), le long d'un axe perpendiculaire à et coupant à la fois l'axe d'ascension droite et l'axe suivant lequel sont disposées lesdites barres filetées (873, 873'), son extrémité libre étant reliée de façon à tourner à un trou fileté qui traverse un bouton d'ajustement haut-bas (877) ; ledit bouton d'ajustement haut-bas (877) étant relié de façon à tourner à une autre barre filetée (878) qui est fixée à une extrémité de l'élément basculant primaire (813) ; lesdites barres filetées (876, 878) ayant des filetages opposés, c'est-à-dire l'un tournant vers la gauche et l'un tournant vers la droite, de façon que lorsqu'on fait tourner le bouton dans un sens, une barre filetée soit dévissée et l'autre soit vissée, et inversement.

22. Support (1) de télescope (2, 702) selon la revendication 21, dans lequel ledit élément basculant primaire (813) comprend une articulation (879) à la liaison avec l'élément coulissant secondaire (815).

23. Support (1) de télescope (2, 702) selon la revendication 22, dans lequel ladite articulation (879) comprend une rotule (880) agencée à l'extrémité de l'élément basculant primaire (813), qui est logée à l'intérieur d'un siège sphérique approprié formé dans l'élément coulissant secondaire (815).

24. Support (1) de télescope (2, 702) selon l'une quelconque des revendications 1 à 23, dans lequel lesdits moyens d'appui (4) sont sélectionnés parmi :
a) une embase comprenant un élément de base (5) sur lequel sont fixées trois jambes (6) qui font saillie radialement par rapport à celle-ci ;
b) un trépied destiné à maintenir la monture (3) en position haute par rapport au sol ;
c) un premier élément d'appui (7) et un deuxième élément d'appui (8) qui sont reliés de façon séparée à la monture (3) et comprenant des moyens (9, 11) de raccordement à la monture (3), des jambes (6a, 6b) partant de ceux-ci, au moins l'une desdites jambes (6b) étant extensible.

25. Support (1) de télescope (2, 702) selon la revendication 24, dans lequel ladite monture (3) est fixée de façon amovible audit élément de base (5) par l'intermédiaire d'un élément de raccordement (12).

26. Support (1) de télescope (2, 702) selon l'une quelconque des revendications 1 à 25, comprenant des moyens de positionnement à niveau à bulle (30) qui sont de préférence associés auxdits moyens d'appui (4) ou audit élément de raccordement (12).

27. Support (1) de télescope (2, 702) selon l'une quelconque des revendications 1 à 26, dans lequel ledit support (1) est constitué de fer, d'acier et/ou d'aluminium et/ou de matériaux composites à base de fibres de carbone.

28. Support (1) de télescope (2, 702) selon l'une quelconque des revendications 1 à 27, ledit support étant modulaire et démontable, dans lequel les éléments formant la monture (3) qui comprennent des éléments basculants primaire (13) et secondaire (16), des barres (17, 17', 19, 19'), une tige transversale (20), des moyens de jonction pivotants (21) et des moyens d'articulation (23) sont assemblés au moyen d'éléments de jonction amovibles (950, 950', 950").

29. Système d'observation optique comprenant un télescope (2, 702) et un support (1) selon l'une quelconque des revendications 1 à 28, dans lequel ledit télescope (2, 702) est sélectionné parmi des télescopes de type Newton, Dobson, Cassegrain, Schmidt-Cassegrain, catadioptriques et leurs variantes.

30. Système d'observation optique selon la revendication 29, dans lequel ledit télescope (2, 702) a un diamètre du miroir primaire supérieur à 40 cm et de préférence supérieur ou égal à 50 cm.

31. Système d'observation optique selon la revendication 29 ou 30, dans lequel ledit télescope (702) comprend une structure de châssis constituée d'un socle de support (760) pour le miroir primaire et d'un anneau de support (761) pour le miroir secondaire, qui sont joints l'un à l'autre par des tiges (762) et des anneaux de renforcement (763), d'un anneau supplémentaire (764) qui est disposé en position intermédiaire entre le socle de support (760) et l'anneau de support (761), permettant de raccorder le télescope (702) aux moyens d'articulation (723).
